# FASCICULE DE BREVET EUROPEEN

(11) **EP 0 993 402 B1**
(45) Date de publication et mention de la délivrance du brevet: **02.10.2002**
(21) Numéro de dépôt: 98937607.4
(22) Date de dépôt: 10.07.1998
(51) Int. Cl.: B62K 25/02, B60B 27/02

(54) **PERFECTIONNEMENT AU DISPOSITIF DE MONTAGE D'UN MOYEU DE ROUE D'UN DEUX-ROUES**
NABENMONTAGEVORRICHTUNG FÜR ZWEIRAD
IMPROVED MOUNTING DEVICE FOR A WHEEL HUB OF A TWO-WHEELED VEHICLE

(30) Priorité: 11.07.1997 EP 97450018; 30.03.1998 FR 9804195
(43) Date de publication de la demande: 19.04.2000
(73) Titulaire: SHIMANO INC., Osaka 590 (JP)
(72) Inventeur: SHIMANO INC., Osaka 590 (JP)
(74) Mandataire: Wallinger, Michael, Dr.-Ing.
(86) Numéro de dépôt international: FR9801499
(87) Numéro de publication internationale: WO99002392

(56) Documents cités:
- EP-A- 0 094 649
- WO-A-97/02149
- FR-A- 2 518 461
- US-A- 3 865 220

## Description

La présente invention concerne un perfectionnement au dispositif de montage d'un moyeu de roue d'un deux roues, plus particulièrement de la roue arrière d'un vélo comprenant une cassette de pignons ou d'une roue avant comportant un accessoire comme un disque et un étrier de freinage.

La demande de brevet international WO 97/02149 décrit un dispositif de velo comprenant un corps de moyeu joint au corps de cassette.
Un premier demi-tube est monté, libre en rotation, par rapport au corps du moyeu et muni de moyens de fixation sur le cadre et un second demi-tube est monté libre en rotation par rapport au corps de cassette et muni de moyens de fixation sur le cadre.
Une tige de manoeuvre et des moyens de blocage de cette tige de manoeuvre sont munis comme des moyens amovibles de liaison en rotation du corps de moyeu et du corps de cassette.

L'objet de l'invention présente est de créer un moyeu de roue amélioré avec des moyens de liaison entre le corps du moyeu et le corps de cassette qui sont fortes en mécanique et facile à monter et à démonter.

Selon l'invention présente, un moyeu de roue est muni comme il est défini dans la revendication 1. Agencements du moyeu de roue sont objets des revendications dépendantes.

Plus particulièrement, la platine comprend des moyens d'entraînement en translation de la première position d'attente vers la seconde position de liaison en rotation.

Selon un premier agencement, les moyens de liaison en rotation comprennent au moins une dent et/ou un logement ménagé dans la platine et prévu pour coopérer avec au moins un logement et/ou une dent ménagé dans le corps de cassette et les moyens d'entraînement en translation sont constitués d'une butée, solidaire du tube de liaison, prévue pour assurer la translation de la platine en fin de course lors du déplacement de ce tube de liaison de la première position rétracté à la seconde position en saillie.

De façon particulière, la platine mobile est coiffante par rapport au corps de cassette.

De façon complémentaire, le corps de cassette de la platine mobile est coiffant par rapport à la platine mobile avec, éventuellement des moyens d'étanchéité.

Selon une variante de l'agencement, les moyens de liaison en rotation comprennent au moins un pion escamotable, mobile entre une position rétractée dans le tube de liaison lorsque le tube de liaison est dans sa première position et une position en saillie pour coopérer avec un logement prévu dans le second demi-tube, notamment une gorge, lorsque le tube de liaison est dans la seconde position.

La présente invention propose aussi des moyens de blocage en translation qui comprennent une tête de verrouillage avec une embase munie de griffes mobiles entre deux positions de crochetage et de décrochetage et de boutons de commande de ces griffes, une coupelle solidaire de la tige de manoeuvre et munie d'une rainure prévue pour être crochetée par les griffes et un ressort de rappel.

Ces moyens de blocage comprennent un levier articulé sur une embase de manoeuvre avec une butée réglable avec un moyen de crantage.

Selon une autre caractéristique, la butée réglable comprend une coupelle vissante sur l'embase et munie de logements borgnes régulièrement répartis à la périphérie de la coupelle et prévus pour coopérer avec la tête d'un pion escamotable porté par l'embase.

Il est aussi prévu de façon complémentaire des moyens antivol avec une paire de bagues extérieures muni d'un logement d'échappement, une paire de cames, excentrées, coaxiales aux bagues et solidaire du levier de manoeuvre, munie chacune d'un pion de verrouillage l'ensemble étant monté à rotation sur un axe fixe.

L'invention est maintenant décrite en détail selon des modes de réalisation et des variantes qui sont illustrés par des dessins sur lesquels les différentes figures représentent :
- figure 1, une vue en perspective éclatée d'un moyeu arrière complet de vélo, selon la présente invention, abstraction faite des pignons pour ne pas encombrer ladite figure,
- figure 2A, une vue en coupe longitudinale d'un premier mode de réalisation d'un moyeu arrière de vélo selon l'invention, avant liaison et blocage,
- figure 2B, une vue identique à celle de la figure 2A mais vue de dessus,
- figure 2C, une vue identique à celle de la figure 2A mais après liaison et blocage, le crabotage en rotation étant quasiment effectué,
- figure 2D, une vue identique à celle de la figure 2C, mais vue de dessus,
- figure 2E, une vue identique à celle de la figure 2A mais en éclatée, avec tous les moyens de liaison manoeuvrés,
- figure 2F, une vue identique à celle de la figure 2E mais vue de dessus,
- figure 2G, une vue en coupe transversale du moyeu de la figure 2A, suivant la ligne 2G-2G,
- figure 3A, une vue en coupe longitudinale d'une variante de réalisation d'un moyeu selon l'invention, avec blocage en translation par pion mobile, avant liaison,
- figure 3B, une vue identique à celle de la figure 3A, mais vue de dessus,
- figure 3C, une vue identique à celle de la figure 3A, mais après liaison,
- figure 3D, une vue identique à celle de la figure 3C, vue de dessus,
- figure 4A, une variante qui ne fait pas partie de l'invention présente
- figure 4B, une vue identique à celle de la figure 4A, vue de dessus,
- figure 5A, une vue en coupe longitudinale d'un moyeu avant de vélo, avant liaison, du type cloche intérieure, qui ne fait pas partie de l'invention présente
- figure 5B, une vue de dessus, identique à celle de la figure 5A, après liaison,
- figure 5C, une vue identique à celle de la figure 5B mais après verrouillage
- figure 6A, une vue en coupe longitudinale d'une variante du type cloche extérieure, avant liaison, qui ne fait pas partie de l'invention présente
- figure 6B, une vue identique à celle de la figure 6A, vue de dessus,
- figure 7A et 7B, un mode de réalisation de moyens de blocage à course réglable en fonction du support de réception, respectivement pour support à forte épaisseur et à faible épaisseur,
- figure 8A, une vue en perspective de moyens de blocage avec antivol à code intégré,
- figure 8B, une vue en coupe longitudinale des moyens de blocage de la figure 8A, dans la position verrouillée, et
- figure 8C, une vue identique à celle de la figure 8B, mais dans la position déverrouillée.

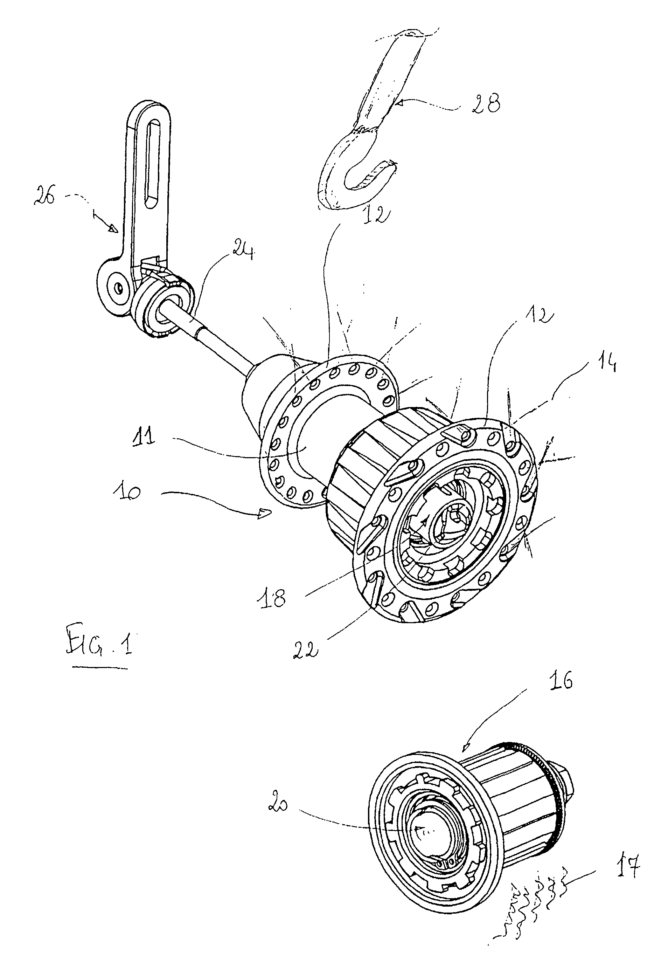

Sur la figure 1, on a représenté un moyeu 10 arrière de vélo avec un corps 11 cylindrique muni d'ailes 12 latérales pour recevoir des rayons 14 prévu pour coopérer avec un corps de cassette 16 prévu pour recevoir des pignons 17, un premier demi-tube 18 et un second demi-tube 20 ainsi que des moyens 22 de liaison, des moyens 24 de manoeuvre de ces moyens de liaison et des moyens 26 de blocage de ces moyens 24 de manoeuvre.

Ce moyeu est prévu pour être monté de façon connue sur un cadre 28, symbolisé sur cette figure 1.

Pour la première variante, les références sont augmentées de 100, afin de distinguer les différents modes de réalisation.

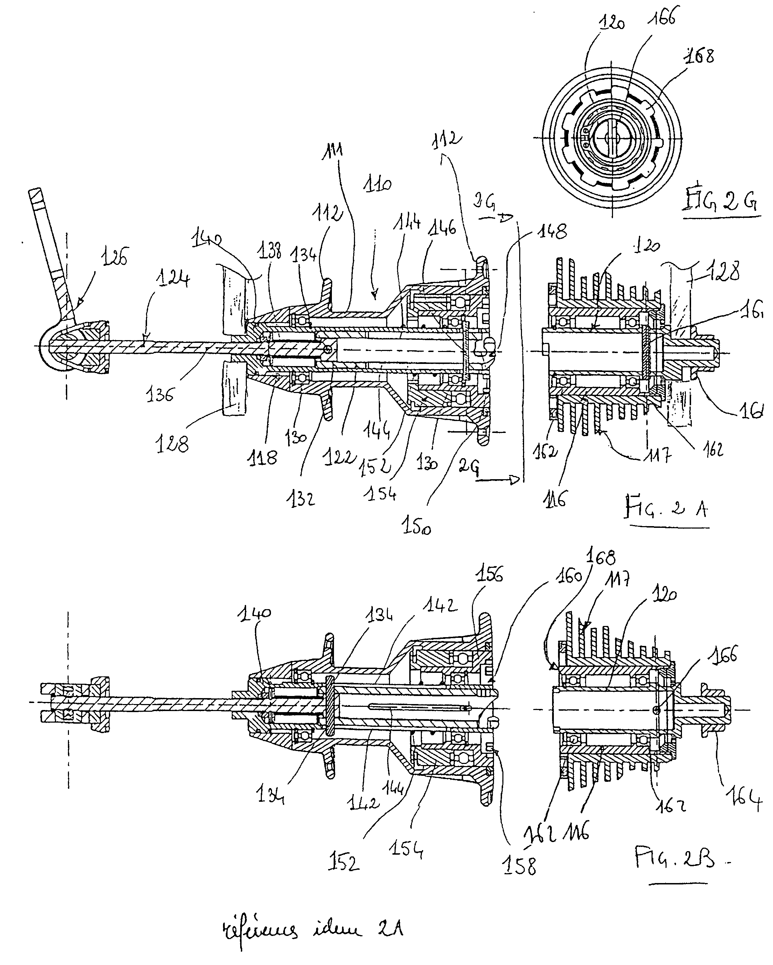

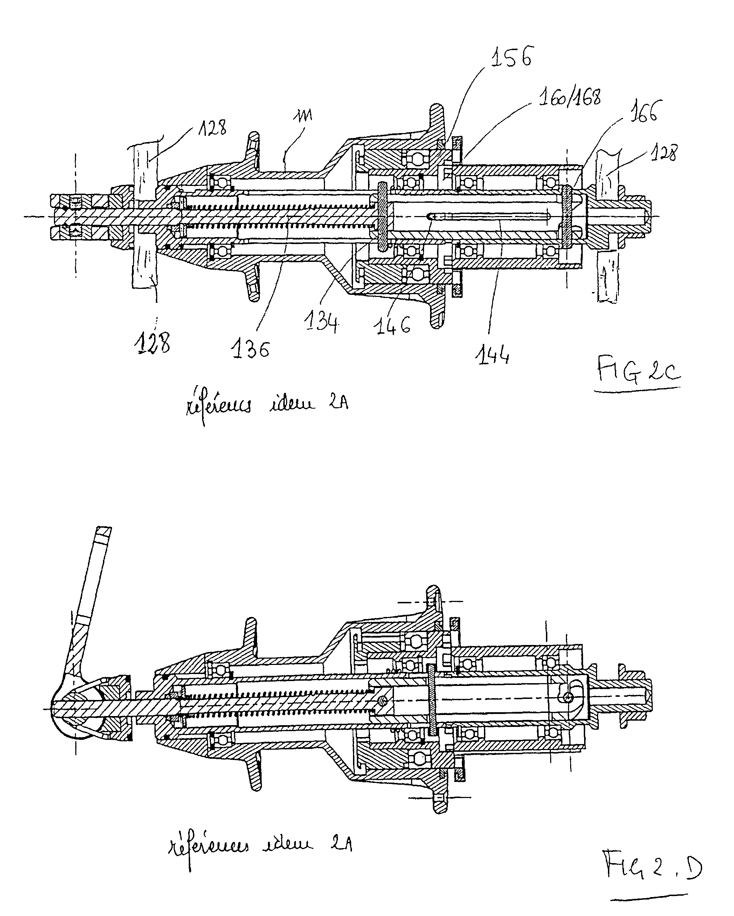

On se reporte aux figures 2A à 2F indifféremment pour décrire le premier mode de réalisation, les références étant identiques pour les pièces identiques, quelle que soit la position de ces pièces.

Sur la figure 2A, le premier demi-tube 118 est monté sur roulements 130 en sorte de le laisser libre en rotation dans le corps 111 de moyeu.

Ce premier demi-tube reçoit les moyens de liaison 122 qui comprennent un tube 132 coaxial au premier demi-tube 118 et mobile en translation dans ce dernier.

Ce tube de liaison 122 est solidarisé par une première goupille 134 à une tige 136 de manoeuvre qui fait partie des moyens 124 de manoeuvre. Un ressort 138 de rappel est interposé entre l'extrémité 140 extérieure du premier demi-tube 118 et cette liaison par goupille du tube de liaison avec la tige 136 de manoeuvre de façon à solliciter le tube 122 de liaison vers le second demi-tube 120.

Cette goupille 134 est en saillie de part et d'autre du tube 122 de liaison et coulisse dans deux lumières 142 ménagées en vis à vis dans le premier demi-tube 118.

De même, le tube 122 de liaison est muni de deux lumières 144 en vis à vis qui assurent le guidage de ce tube de liaison par rapport à une seconde goupille 146, perpendiculaire à la première goupille 134.

Ce tube de liaison comprend de plus une tête 148 avec une fente 150 à oreilles, quart de tour. On note que le tube de liaison fait très légèrement saillie au delà du premier demi-tube 118 et donc du corps de moyeu puisque l'extrémité intérieure du premier demi-tube est parfaitement alignée avec le plan de liaison du corps de moyeu avec la cassette à pignons.

Cet ensemble est complété par un ressort 152 de pression coaxial, extérieur au premier demi-tube 118, à l'état libre dans la position d'attente des figures 2A et 2B.

Un mécanisme 154 de roue libre, avantageusement celui à cylindres à blocage et débrayage par pente, est interposé entre le premier demi-tube 118 et le corps 111 de moyeu.

Ce mécanisme est intégré dans une platine 156 qui présente une face 158 de contact avec des dents 160. Cette platine est susceptible d'être translatée sur une course courte par rapport au corps 111 de moyeu, vers l'extérieur pour faire très légèrement saillie par rapport au plan de liaison du corps de moyeu avec la cassette à pignons comme cela sera expliqué ultérieurement dans la description de la mise en oeuvre.

Le corps 116 de cassette comprend quant à lui un second demi-tube 120 et ce corps est monté libre en rotation et fixe en translation par rapport audit second demi-tube 120 grâce à des roulements 162 et des circlips adaptés. Ce second demi-tube 120 est fixé par un écrou 164 sur le cadre 128.

Ce second demi-tube 120 fait très légèrement saillie vers l'intérieur par rapport au corps 116 de cassette, sur un secteur angulaire donné uniquement.

Une troisième goupille 166 est solidaire de ce second demi-tube 120 et montée affleurante par rapport à ce second demi-tube.

Le corps 116 de cassette est également muni de logements 168, visibles en détail sur la figure 2G, prévus pour recevoir les dents 160 de la face de contact 158 de la platine 156 du corps 111 de moyeu et assurer ainsi une liaison en rotation du moyeu et de la cassette à pignons.

Le montage de ce dispositif est particulièrement aisé.

L'utilisateur exerce une traction sur les moyens 124 de manoeuvre, vers l'extérieur pour préparer le moyeu, ce qui place les différents demi-tubes et tube comme sur les figures 2A et 2B. Le second demi-tube 120 est fixe sur le cadre.

Ensuite la roue avec son moyeu 110 est introduite dans l'espace réservé dans le cadre, l'extrémité extérieure 140 du premier demi-tube 118 étant alors introduite dans le logement prévu à cet effet dans le cadre 128.

On note que l'extrémité légèrement en saillie 148 du tube 118 et l'extrémité intérieure du second demi-tube 120 coopèrent pour faciliter le guidage en alignement et le positionnement des différents éléments.

La tige 124 des moyens de manoeuvre est déplacée en translation avec l'assistance du ressort de rappel 138. La tige est en réalité munie d'un cran qui coopère avec un joint torique par exemple pour créer un point dur, ce qui la maintient en position d'attente tant que l'utilisateur ne la débloque pas.

Le déplacement de la tige entraîne le tube 122 de liaison qui pénètre dans le second demi-tube 120, assurant ainsi la continuité mécanique des deux demi-tubes.

La goupille qui en est solidaire provoque à son tour, en fin de course, une pression sur la platine 156 support du mécanisme 154 de roue libre par l'intermédiaire du ressort 152 de pression. Cette position est montrée en éclaté sur les figures 2E et 2F pour faciliter la compréhension sans que ces positions puissent être considérées comme fonctionnelles.

Les dents 160 de la platine pénètrent dans les logements 168 correspondants et la fente 150 à oreilles quart de tour de la tête 148 s'introduit de part et d'autre de la troisième goupille 166.

Il suffit alors de faire effectuer un quart de tour environ aux moyens de manoeuvre pour assurer un verrouillage de la tête par rapport à la troisième goupille 166.

Ce verrouillage induit plusieurs effets.

Tout d'abord les deux demi-tubes 118 et 120 sont serrés l'un contre l'autre et les dents 160 sont parfaitement plaquées dans leurs logements 168.

Le premier demi-tube 118 est préfixé sur le cadre 128 par son extrémité extérieure 140.

Il suffit ensuite de manoeuvrer les moyens 126 de blocage à excentrique pour assurer une fixation définitive du dispositif sur le cadre.

Une description de ces moyens 126 de blocage est donnée ultérieurement en regard d'un mode de réalisation particulier.

La fente 150 à oreilles présente des crans de sensation pour permettre à l'utilisateur de percevoir le positionnement correct de l'ensemble monté et d'apporter une sécurité supplémentaire en situation verrouillée.

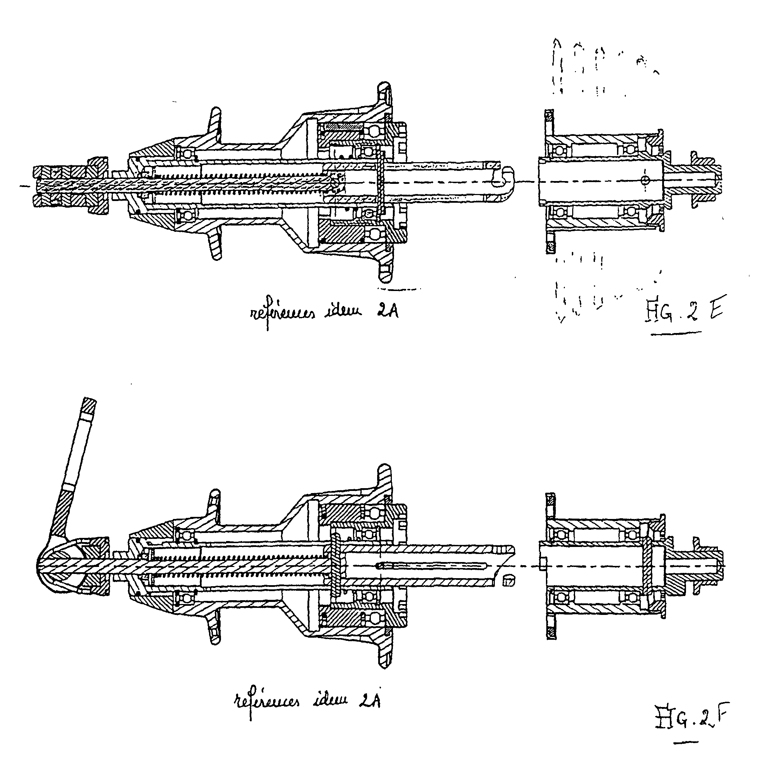

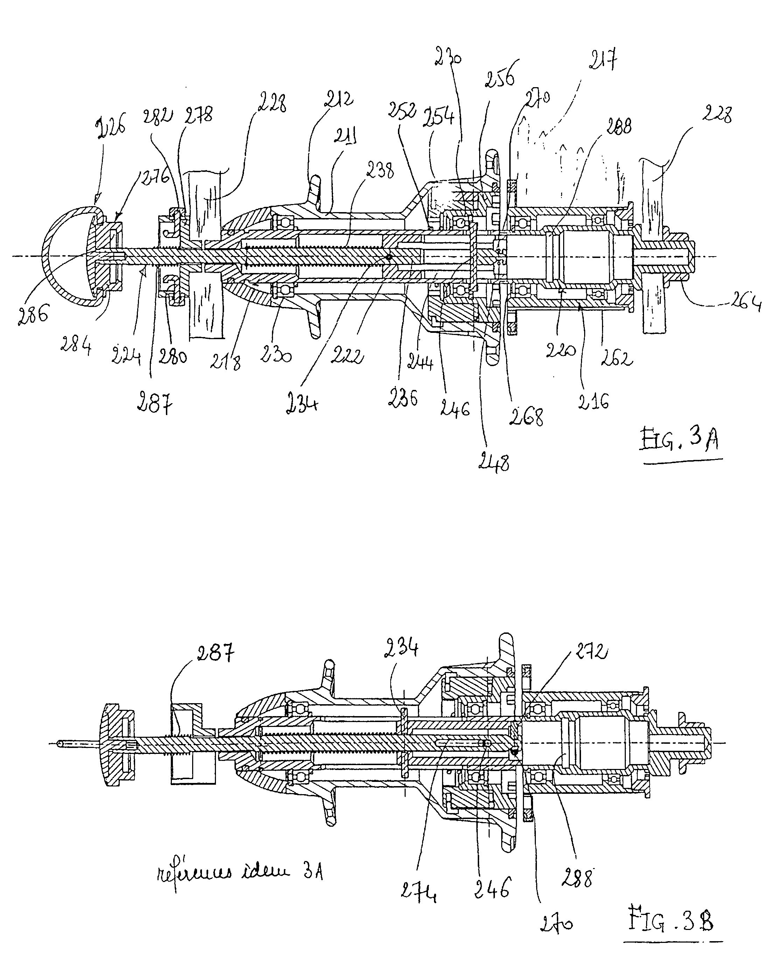

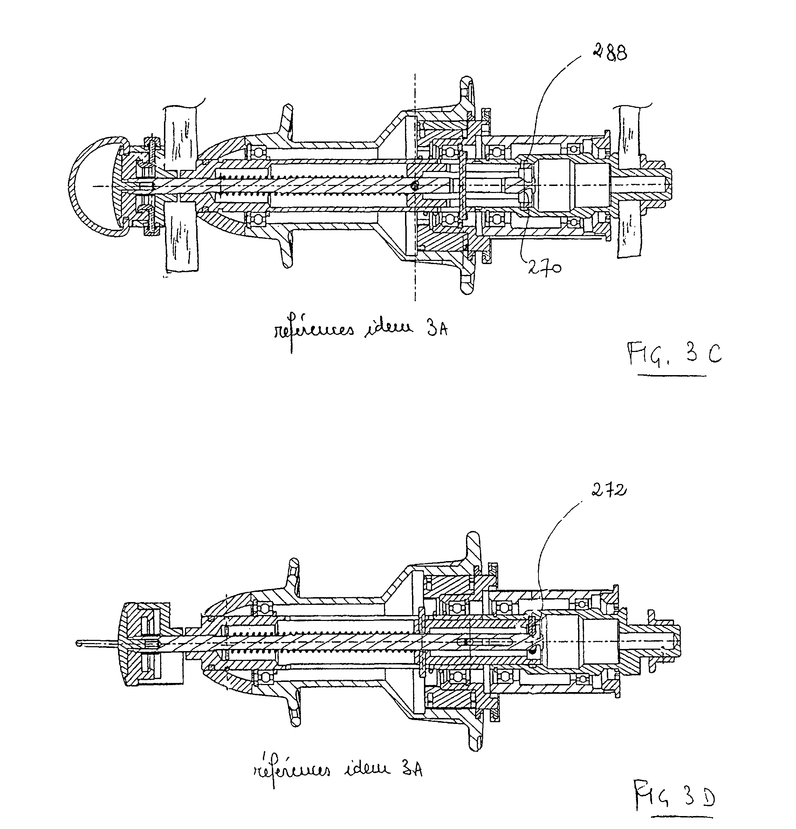

Sur les figures 3A à 3D, on a représenté une variante de réalisation, les références des différents éléments étant augmentées de 100 par rapport à celles des figures 2A à 2G.

Les deux demi-tubes 118 et 120 sont sensiblement identiques, aux variantes de formes industrielles près, tout comme le corps 211 de moyeu, le corps 216 de cassette, les différents roulements 230, 262.

Les différences se situent au niveau de la tige 236 des moyens de manoeuvre 224, des moyens de blocage 226 et du tube de liaison 222 ainsi que de la tête de liaison.

La tige 236 est en effet prolongée à travers le tube de liaison 222 pour faire saillie côté intérieur. Son extrémité comprend de plus un cône 270 et au moins un pion 272; à déplacement radial, sollicité vers le centre par un ressort non représenté, disposé à la périphérie du tube de liaison 222 et mobile en translation radialement par rapport à ce tube de liaison entre une première position escamotée engendrée par chaque ressort dans laquelle chaque pion est affleurant à la périphérie du tube de liaison et une seconde position dans laquelle chaque pion est en saillie sous la pression engendrée par le cône comme cela sera expliqué immédiatement après dans la description.

Cette tige est aussi équipée d'une lumière 274 pour assurer le passage de la seconde goupille 246 lors des déplacements de la tige, la première goupille 234 rendant solidaires le tube de liaison 222 et la tige 236.

En complément des modifications ci-avant, les moyens de blocage 226 comprennent une tête 276 de verrouillage. Cette tête comprend :
- une embase 278, solidaire du cadre 228, munie de griffes 280 mobiles entre deux positions l'une de crochetage sous. l'effet de boutons 282 de commande, sollicités chacun par un ressort, et l'autre de décrochetage lorsque l'utilisateur exerce une pression manuelle sur les boutons de commande,
- une coupelle 284, vissée sur l'extrémité de la tige 224 selon l'épaisseur du cadre 228, avec une rainure prévue pour être crochetée par les griffes 280, et
- un ressort 287 de rappel.

Quant au second demi-tube 220, il subit une seule modification qui consiste à ménager une gorge 288 dans sa paroi intérieure pour recevoir les pions 272.

La mise en oeuvre de cette variante est maintenant décrite.

Ainsi que précédemment, l'utilisateur procède à la mise en place de la roue et à l'alignement des deux demi-tubes 218 et 220.

Il suffit ensuite de pousser la tige 236 qui entraîne le tube de liaison 222 qui pénètre dans le second demi-tube 220 et assure la liaison mécanique.

Lorsque la tige est quasiment déplacée en totalité, l'utilisateur percute la tête 276, ce qui a plusieurs conséquences..

Tout d'abord, le cône 270 provoque la mise en saillie des pions 272 radialement, qui viennent se loger dans la rainure 288 prévue à cet effet et le diamètre plus important de la tige maintient ces pions dans cette position.

Ensuite les griffes 280 crochètent la gorge 286, ce qui immobilise en translation la tige 236 par rapport au corps 211 de moyeu et au corps 216 de cassette.

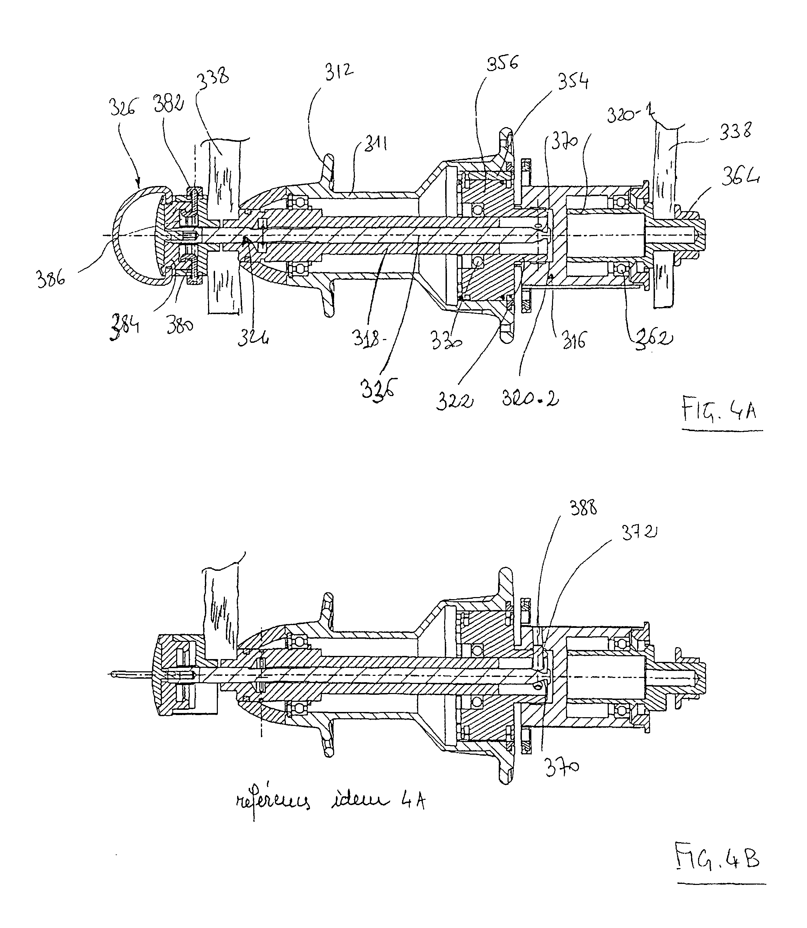

Sur les figures 4A et 4B, on à référencé les différents éléments en augmentant de 100 les références des figures 3A à 3D.

Cette variante présente des simplifications en ce sens que certaines pièces ont plusieurs fonctions et ne fait pas partie de l'invention présente.

Les moyens de blocage 326 comprennent les mêmes éléments que précédemment.

La tige 326 a le même rôle et agit sur des pions 372 à déplacement radial au moyen d'un cône 370.

Par contre, le tube 322 de liaison est monolithique avec la platine 356 mobile en translation et son profil est prévu pour coopérer avec un logement 320-2 qui est ménagé à même le corps 316 de cassette, ceci dans le prolongement du demi-tube 320-1 proprement dit.

Les pions 372 assurent ainsi par mise en saillie par le cône le clavetage en translation et en rotation du tube 322 de liaison avec le corps 316 de cassette, en pénétrant dans des logements 388. Il y a coaxialité des éléments.

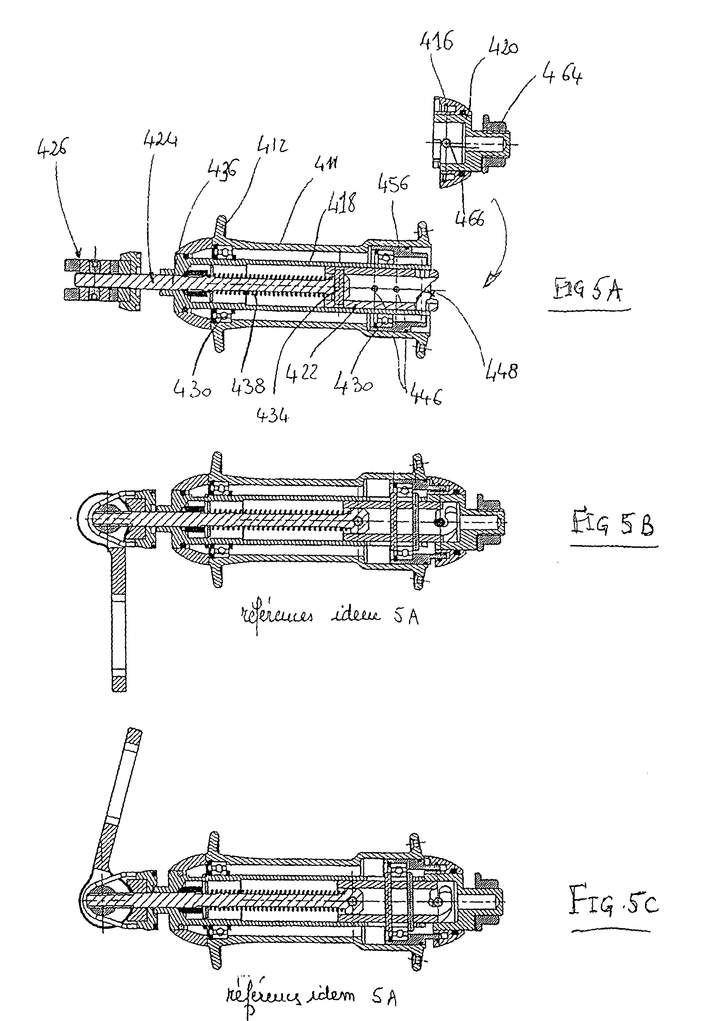

Sur les figures 5A à 5C, on a représenté un moyeu avant et les références sont dans les nombres à partir de 400 pour permettre de donner des références liées aux éléments identiques car le moyeu avant n'est différent que par l'absence de roue libre et de pignons. Cette variation ne fait pas partie de l'invention présente.

Le moyeu avant comprend ainsi un corps 411 de moyeu avec un tube de liaison et des moyens 424 de manoeuvre de ce tube comportant une tige 436 solidaire du tube de liaison par une goupille 434 et avec des moyens 426 de blocage des mouvements en translation de cette tige.

Dans ce corps 411 de moyeu, on trouve de nouveau un demi-tube 418 monté avec des roulements 430 en sorte de laisser le corps de moyeu libre en rotation par rapport à ce demi-tube.

La platine 456 est montée mobile en translation sur une course courte par rapport au corps 411 de moyeu et entraînée par une paire de goupilles 446.

Le corps de cassette 416 reste inchangé, à ceci près que la forme est réduite en encombrement du fait de l'absence de pignons car le corps de cassette est devenu une cloche à vocation principale, mais non des moindres, d'étanchéité. Ce corps de cassette est immobilisé en rotation par rapport au second demi-tube 420 par la goupille.

La goupille 466 reçoit aussi la tête 448 de liaison et assure la rigidité mécanique de l'ensemble comme précédemment pour le moyeu arrière.

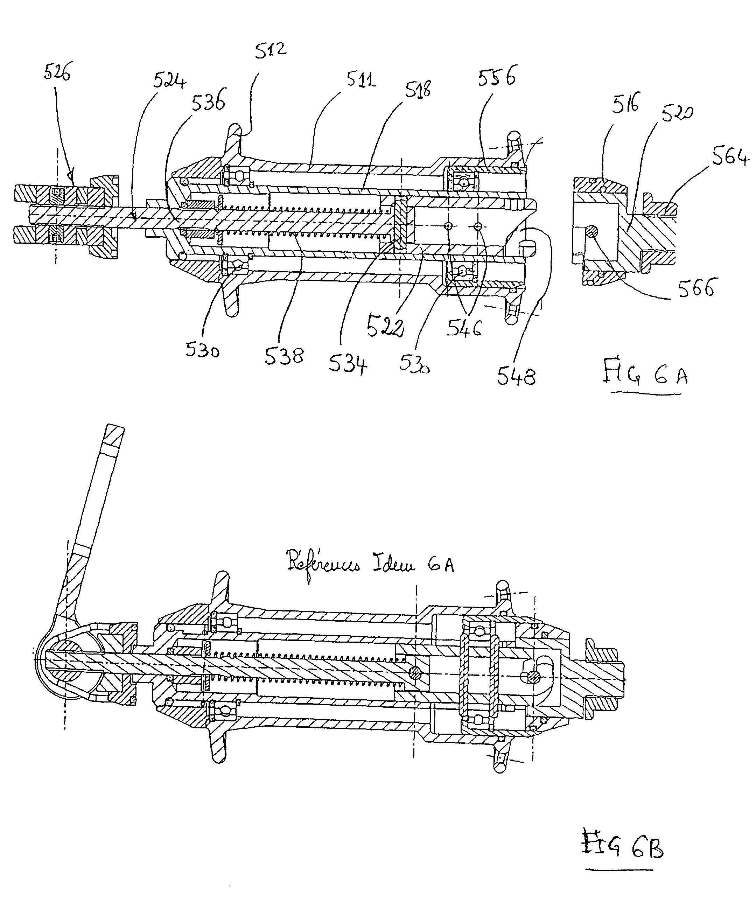

Dans la variante représentée sur ces figures 5A à 5C, on a noté que la platine 456 s'emboîte à l'intérieur du corps 416 de cassette mais l'agencement inverse est possible et c'est l'objet de la variante montrée sur les figures 6A et 68, les références étant identiques à celles des figures 5A à 5C augmentées de 100. Cette variation ne fait pas partie de l'invention présente.

Dans cette variante, la platine 556 vient en cloche pour coiffer le corps 516 de cassette lors du montage tel que représenté sur la figure 6B.

On peut, bien entendu, associer à ces montages de moyeu avant, tels qu'ils viennent d'être décrits, un disque de freinage par exemple, disposé sur la partie solidaire du cadre et qui subsiste lors du démontage de la roue avant. La présence de ce disque ne perturbe ni le démontage ni le remontage de la roue, ce qui est particulièrement appréciable en course comme par le simple usager.

Sur l'ensemble des variantes de réalisation, il est prévu des joints d'étanchéité qui n'ont pas été décrits. De tels joints généralement de type torique ou à lèvres sont bien connus et évitent la pénétration d'éléments susceptibles de perturber le fonctionnement des roulements ou de dégrader les pièces internes.

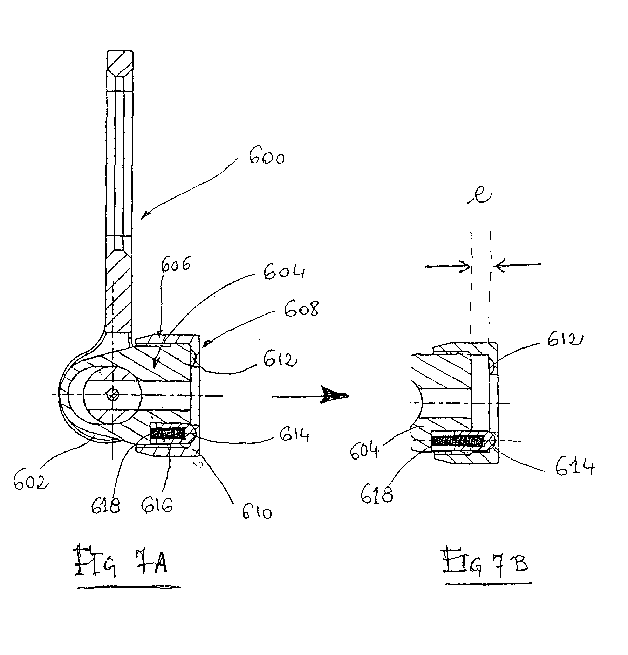

Il subsiste un point non résolu dans les agencements qui précèdent et qui peut gêner l'utilisateur dans les différentes phases de montage/démontage des moyeux ainsi présentés, tant à l'arrière qu'à l'avant, c'est le réglage du serrage des demi-tubes, c'est à dire le positionnement des éléments du moyen de blocage, notamment du levier 600 de manoeuvre avec excentrique 602 ainsi que montré sur les figures 7A et 7B.

En effet, généralement, la tige des moyens de serrage comprend un levier d'un côté et elle est traversante avec un écrou monté vissant sur l'extrémité de la tige. Cet écrou permet d'ajuster la longueur de la tige en fonction des épaisseurs du cadre pour obtenir un serrage optimal.

Dans ce cas, il existe néanmoins un problème pour la roue avant car il est prévu généralement un ergot de sécurité qui oblige l'utilisateur à dévisser plus que nécessaire l'écrou pour démonter la roue, ce qui se traduit ensuite par une perte de repère pour le remontage.

Sur les figures 7A et 7B, selon la présente invention, dans le cas d'un agencement à deux demi-tubes et tube de liaison, il est prévu une embase 604 de manoeuvre qui reçoit de façon articulée le levier 600. Cette embase comprend aussi une butée 606 réglable avec un moyen 608 de crantage.

Ce moyen 608 de crantage comprend une coupelle 610 vissante sur l'embase formant butée, munie de logements 612 borgnes, régulièrement répartis à la périphérie de la coupelle.

Ces logements borgnes sont prévus pour recevoir la tête 614 d'un pion 616, intégré dans l'embase, mobile en translation et pressé contre la coupelle par un ressort 618.

L'utilisateur peut ainsi régler la première fois la coupelle par rapport à l'embase puisque le dévissage de la coupelle permet un gain de distance variable e et d'ajuster la longueur de l'ensemble tige-tube de liaison.

Le crantage permet de maintenir la position relative de la coupelle même quand le levier 600 est manoeuvré et pendant que la roue portant ce moyen est mise en place.

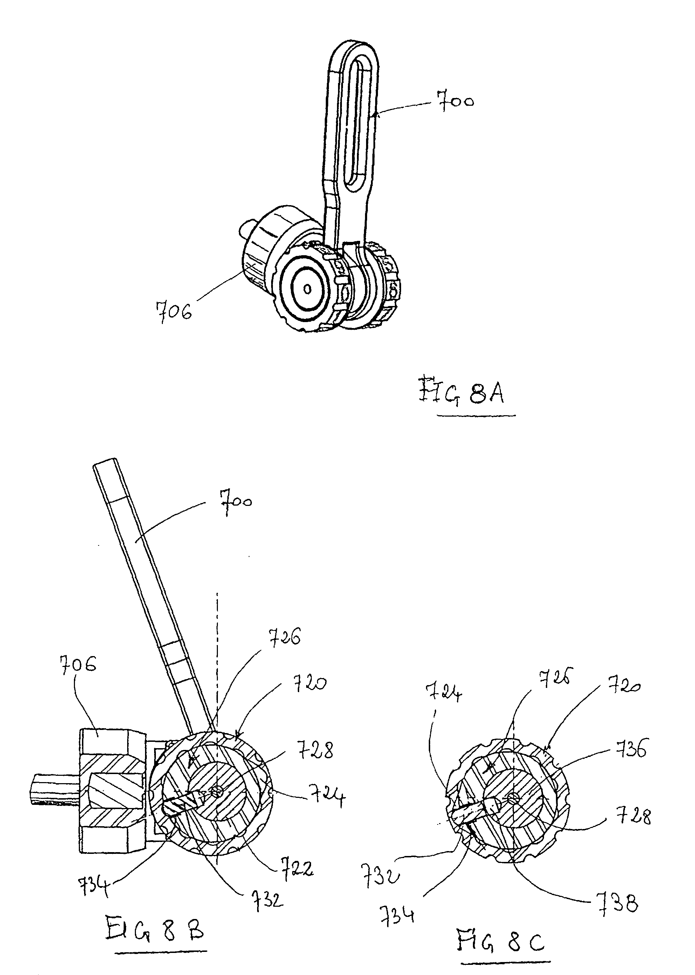

Selon une variante de réalisation montrée sur les figures 8A à 8C, il est possible de prévoir dans ce cas, un moyen 700 antivol. Les référencés identiques avec celles des figures 6A et 6B sont augmentées de 100.

Ce moyen antivol est combiné avec le levier 700 afin d'en interdire ou d'en autoriser les mouvements.

Ce moyen 700 antivol comprend :
- une paire de bagues 720 extérieures, indépendantes, moletées qui comprennent chacune intérieurement des crans 722, ainsi qu'un unique logement 724 d'échappement, l'ensemble étant régulièrement réparti sur toute la périphérie intérieure,
- une paire de cames 726 intérieures, lisses extérieurement et intérieurement, coaxiales à la paire de bagues, liées toutes deux au levier, ces cames intérieures étant excentrées par rapport à l'axe 728 de rotation et munies chacune d'un logement 730 de réception d'un pion 732 de verrouillage, en forme de champignon avec un ressort 734 de rappel qui pousse ledit pion radialement vers la périphérie extérieure,
- un axe cylindrique 736 ayant pour centre l'axe 728, cet axe étant coaxial aux paires de bagues et de cames, et muni d'un trou borgne au diamètre du pion 732 de verrouillage, immobile en rotation.

Le fonctionnement de ce moyen antivol est indiqué ci-après.

Les bagues sont numérotées extérieurement ou pour le moins munies de repères. Le pion 732 de verrouillage peut prendre une première position dans laquelle il est poussé par le ressort dans le logement 724 d'échappement de la bague correspondante, c'est à dire lorsque ledit logement d'échappement est en vis à vis dudit pion par rotation de cette bague correspondante.

Il faut donc tourner chaque bague pour que le repère permette d'aligner les pions avec les logements d'échappement pour manoeuvrer le levier. On note que la longueur de chaque pion est telle que lorsqu'il échappe, il ne pénètre plus dans l'axe cylindrique 736 immobile.

Dès lors, le levier et les cames peuvent pivoter librement pour assurer un serrage ou un déserrage, entraînant alors les bagues et le pion.

Pour le remontage et la mise en place de l'antivol, il suffit de remonter le moyeu et après le serrage par manoeuvre du levier et mouvement de l'excentrique, il convient de faire tourner les bagues de façon aléatoire pour brouiller la combinaison.

De ce fait, chaque pion est repoussé à l'encontre de l'effort du ressort 734 et pénètre dans le trou borgne 738 de l'axe cylindrique correspondant.

Ainsi les cames 726 sont immobilisées et le levier aussi, ce qui interdit le démontage du moyeu.

## Revendications

1. Un moyeu de roue, comprenant
- un corps de cassette (116),
- un corps (111) muni d'ailes latérales prévues pour recevoir des rayons et le corps de cassette (116).
- un premier demi-tube (118) monté libre en rotation par rapport au corps du moyeu (111) et muni de moyens de fixation sur un cadre,
- un second demi-tube (120) monté libre en rotation par rapport au corps de cassette (116) et muni de moyens de fixation sur le cadre,
- une tige de manoeuvre (136), et des moyens de blocage (126) de cet tige de manoeuvre, et
- des moyens amovibles de liaison en rotation du corps cylindrique de moyeu et du corps de cassette,
**caractérisé en ce que**
- il comprend un tube de liaison (122) de ces deux demi-tubes, coaxial intérieur aux deux demi-tubes (118, 120), prévu pour coulisser dans les premier et second demi-tubes entre au moins une première position dans laquelle le tube de liason (122) est sensiblement rétracté à l'intérieur du premier demi-tube (118) et une seconde position dans laquelle le tube de liason (122) est en saillie hors du premier tube (118) et pénètre dans le second demi-tube (120),
- la tige de manoeuvre (136) constitue des moyens de manoeuvre du tube de liaison (122),
- ces moyens de liaison amovible en rotation comprennent une platine (156), coaxiale extérieure au premier demi-tube (118), mobile en translation dans le corps de moyeu entre deux positions, la première d'attente et l'autre de liaison en rotation, cette platine (156) étant munie de moyens de liaison (160, 168) en rotation avec le corps de cassette.

2. Un moyeu de roue selon la revendication 1,
**caractérisé en ce que** la platine (156) comprend des moyens (152) d'entraînement en translation de la première position d'attente vers la seconde position de liaison en rotation.

3. Un moyeu de roue selon la revendication 1 et 2,
**caractérisé en ce que** les moyens de liaison en rotation comprennent au moins une dent (160) et/ou un logement (168) ménagé dans la platine (156) et prévu pour coopérer avec au moins un logement (168) et/ou une dent (160) ménagé dans le corps de cassette et les moyens d'entraînement en translation sont constitués d'une butée, solidaire du tube de liaison, prévue pour assurer la translation de la platine (156) en fin de course lors du déplacement de ce tube de liaison (122) de la première position rétracté à la seconde position en saillie.

4. Un moyeu de roue selon la revendication 1, 2 ou 3, caractarisé en ce que la platine (156) mobile est coiffante par rapport au corps de cassette.

5. Un moyeu de roue selon la revendication 1, 2 ou 3, **caractérisé en ce que** le corps de la platine (156) mobile est coiffant par rapport au corps de cassette (116) avec, éventuellement des moyens d'étanchéité.

6. Un moyeu de roue selon la revendication 1 et 2,
**caractérisé en ce que** les moyens de liaison en rotation comprennent au moins un pion escamotable (272), mobile entre une position rétractée dans le tube de liaison (222) lorsque le tube de liaison est dans sa première position et une position en saillie pour coopérer avec un logement prévu dans le second demi-tube (220), notamment une gorge (288), lorsque le tube de liaison (222) est dans la seconde position.

7. Un moyeu de roue selon la revendication 6,
**caractérisé en ce que** les moyens de blocage (226) en translation comprennent une tête de verrouillage (276) avec une embase munie de griffes (280) mobiles entre deux positions de crochetage et de décrochetage et de boutons (282) de commande de ces griffes, une coupelle (284) solidaire de la tige de manoeuvre (224) et munie d'une rainure prévue pour être crochetée par les griffes (280) et un ressort de rappel (287).

8. Un moyeu de roue selon l'une des revendications
1 à 3, **caractérisé en ce que** les moyens de blocage comprennent un levier (600) articulé sur une embase de manoeuvre (604) avec une butée réglable (606) avec un moyen de crantage (608).

9. Un moyeu de roue selon la revendication 8,
**caractérisé en ce que** la butée réglable (606) comprend une coupelle (610) vissante sur l'embase (604) et munie de logements borgnes (612) régulièrement répartis à la périphérie de la coupelle et prévus pour coopérer avec la tête (614) d'un pion escamotable (616) porté par l'embase.

10. Un moyeu de roue selon la revendication 9
**caractérisé en ce que** les moyens de blocage comprennent des moyens antivol avec une paire de bagues extérieures (720) muni d'un logement d'échappement (724), une paire de cames (726), excentrées, coaxiales aux bagues (720) et solidaire du levier (700) de manoeuvre, munie chacune d'un pion de verrouillage (732) l'ensemble étant monté à rotation sur un axe fixe.

## Patentansprüche

1. Eine Radnabe mit:
- einem Gehäusekörper (116)
- einem zylindrischen Nabengehäuse (111) mit seitlichen Flügeln, welche so gestaltet sind, daß sie Speichen und den Gehäusekörper (116) aufnehmen,
- einem ersten Halbrohr (118), die so angeordnet ist, daß sie sich frei bezüglich des Nabenkörpers (111) dreht und mit Einrichtungen zur Befestigung einem Rahmen versehen ist,
- einem zweiten Halbrohr (120), die so angeordnet ist, daß sie sich frei bezüglich des Gehäusekörpers (116) dreht und mit Einrichtungen zur Befestigung am Rahmen versehen ist,
- einer Betätigungsstange (136) und Einrichtungen (126), um die Betätigungsstange (136) festzuklemmen, und
- entfernbaren Einrichtungen, um den Nabenkörper (111) drehbar mit dem Gehäusekörper (116) zu verbinden,
**dadurch gekennzeichnet, daß**
- ein Rohr (122) zur Verbindung der beiden Halbrohre (118, 120) vorgesehen ist, das innen mit den Halbrohren koaxial angeordnet ist und derart gestaltet ist, daß es in die ersten und zweiten Halbrohre zwischen wenigstens einer ersten Position, in der das Verbindungsrohr (122) im wesentlichen innerhalb des ersten Halbrohrs (118) zurückgezogen ist und einer zweiten Position, in der das Verbindungsrohr (122) aus dem ersten Rohr (118) hervorsteht und in das zweite Halbrohr (120) eintritt, gleitet,
wobei die Betätigungsstange (136) eine Betätigungseinrichtung des Verbindungsrohres (122) bildet, und
wobei die entfernbaren Einrichtungen eine äußere mit dem ersten Halbrohr (118) koaxiale Platte (156) aufweisen, die längs beweglich in dem zylindrischen Nabenkörper zwischen zwei Positionen ist, wobei die erste eine Stand-By-Position und die andere eine Drehverbindungsposition ist,
wobei die Platte (156) mit Einrichtungen (160, 168) zur Verbindung unter einer Drehbewegung mit dem Gehäusekörper versehen ist.

2. Eine Radnabe gemäß Anspruch 1,
**dadurch gekennzeichnet, daß** die Platte (156) Einrichtungen für die Längsbewegung von der ersten Stand-By-Position in Richtung der zweiten Drehverbindungsposition aufweist.

3. Eine Radnabe gemäß Anspruch 1 und 2,
**dadurch gekennzeichnet, daß** die Drehverbindungseinrichtungen wenigstens einen in der Platte (156) angeordneten Zahn (160) und/oder eine Aufnahmeeinrichtung (168) aufweisen, um mit wenigstens einer Aufnahmeeinrichtung (168) und/oder einem Zahn (160), die in dem Gehäusekörper angebracht sind, zusammenzuwirken, und daß die Längsbewegungseinrichtungen durch einen Anschlag gebildet sind, welcher einteilig mit dem Verbindungsrohr ausgebildet ist und so gestaltet ist, daß er die Längsbewegung der Platte am Ende des Weges sicherstellt, wenn sich das Verbindungsrohr 122 von der ersten, zurückgezogenen Position in die zweite, hervorstehende Position bewegt.

4. Eine Radnabe gemäß Anspruch 1, 2 oder 3,
**dadurch gekennzeichnet, daß** die bewegliche Platte (156) den Gehäusekörper bedeckt.

5. Eine Radnabe gemäß Anspruch 1, 2 oder 3,
**dadurch gekennzeichnet, daß** der Körper der beweglichen Platte (156) den Gehäusekörper (516) bedeckt, vorzugsweise mit Dichtungseinrichtungen.

6. Eine Radnabe gemäß Anspruch 1 und 2,
**dadurch gekennzeichnet, daß** die Einrichtung zur Drehverbindung wenigstens einen zurückziehbaren Zapfen (272) aufweist, der zwischen einer zurückgezogenen Position in dem Verbindungsrohr (222), in der das Verbindungsrohr in ihrer ersten Position ist und einer hervorstehenden Position, um mit einer Aufnahmeeinrichtung, insbesondere einer Nut (288), die in dem zweiten Halbrohr (220) vorgesehen ist, zusammenzuwirken, wenn das Verbindungsrohr (222) in der zweiten Position ist, beweglich ist.

7. Eine Radnabe gemäß Anspruch 6,
**dadurch gekennzeichnet, daß** die längswirkenden Klemmeinrichtungen (226) einen Abschlußkopf (276) mit einer Auflage, die mit Klauen (280), die zwischen zwei Positionen des Einhakens und Enthakens beweglich sind und Betätigungsknöpfen (282) für diese Klauen, und eine Schale (284), die einteilig mit der Betätigungsstange (224) ausgebildet ist und mit einer Nut versehen ist, welche so gestaltet ist daß sie von den Klauen (280) eingehakt werden kann, und mit einer Rückstellfeder (287) aufweisen.

8. Eine Radnabe gemäß einem der Ansprüche 1 bis 3,
**dadurch gekennzeichnet, daß** die Klemmeinrichtungen einen angelenkten Hebel (600) auf einer Betätigungsauflage (604) mit einem einstellbaren Anschlag (606) mit einer Greifeinrichtung (608) aufweisen.

9. Eine Radnabe gemäß Anspruch 8,
**dadurch gekennzeichnet, daß** der einstellbare Anschlag (606) eine Schale (610) aufweist, die auf die Auflage (604) geschraubt ist und mit blinden Aufnahmen (612) versehen ist, die regelmäßig auf dem Umfang der Schale beabstandet sind und so gestaltet sind, daß sie mit einem Kopf (614) eines zurückgezogenen Zapfens (616), der von der Auflage getragen wird, zusammenwirken.

10. Eine Radnabe gemäß Anspruch 9,
**dadurch gekennzeichnet, daß** die Klemmeinrichtung Anti-Diebstahl-Einrichtungen mit einem Paar äußerer Ringe (720), die eine Entlastungsaufnahme (724) aufweisen, einem Paar Nocken (726), welche versetzt und koaxial zu den Ringen (720) und einteilig mit dem Betätigungshebel (700) sind, aufweist, wobei jede einen Verschlußzapfen (732) aufweist und die Vorrichtung drehbar auf einer festen Achse montiert ist.

## Claims

1. A wheel hub comprising
a casing body (116),
a cylindrical hub body (111) provided with lateral wings designed to receive spokes and the casing body (116),
a first half tube (118) mounted so as to rotate freely with respect to the hub body (111) and provided with means for fixing on a frame,
a second half tube (120) mounted so as to rotate freely with respect to the casing body (116) and provided with means for fixing on the frame,
a control rod (136) and means (126) for clamping the control rod (136), removable means for rotationally linking the hub body (111) to the casing body (116),
**characterised in that**
a tube (122) for linking the two half tubes (118, 120) is provided, internally coaxial with the two half tubes, designed to slide in the first and second half tubes between at least a first position in which the linking tube (122) is substantially retracted within the first half tube (118) and a second position in which the linking tube (122) protrudes from the first tube and enters the second half tube (120),
wherein the control rod (136) forms control means of the linking tube (122), and
wherein the removable means comprise a plate (156), externally coaxial with the first half tube (118), translationally movable in the cylindrical hub body between two positions, the first a standby position and the other a rotational linking position, this plate (156) being provided with means (160, 168) for rotational linking with the casing body.

2. A wheel hub according to claim 1, **characterised in that** the plate (156) comprises means (152) for translational driving from the first standby position towards the second rotational linking position.

3. A wheel hub according to claims 1 and 2, **characterised in that** the rotational linking means comprise at least one tooth (160) and/or one receptacle (168) arranged in the plate (156) and designed to cooperate with at least one receptacle (168) and/or one tooth (160) arranged in the casing body and the translational driving means are formed by a stopper, which is integral with the linking tube, designed to ensure the translation of the plate at the limit of travel when this linking tube (122) moves from the first retracted position to the second protruding position.

4. A wheel hub according to claim 1, 2 or 3, **characterised in that** the movable plate (156) covers the casing body.

5. A wheel hub according to claim 1, 2 or 3, **characterised in that** the body of the movable plate (156) covers the casing body (116), possibly with sealing means.

6. A wheel hub according to claim 1 and 2, **characterised in that** the means for rotational linking comprise at least one retractable peg (272), movable between a retracted position in the linking tube (222) when the linking tube is in its first position and a protruding position for cooperating with a receptacle provided in the second half tube (220), notably a groove (288), when the linking tube (222) is in the second position.

7. A wheel hub according to claim 6, **characterised in that** the translational clamping means (226) comprise a locking head (276) with a seat provided with claws (280) that are movable between two positions of hooking and unhooking and control buttons (282) for these claws, a cup (284) which is integral with the control rod (224) and provided with a groove designed for being hooked by the claws (280) and a return spring (287).

8. A wheel hub according to one of claims 1 to 3, **characterised in that** the clamping means comprise an articulated lever (600) on a control seat (604) with an adjustable stopper (606) with a catching means (608).

9. A wheel hub according to claim 8, **characterised in that** the adjustable stopper (606) comprises a cup (610) screwing onto the seat (604) and provided with blind receptacles (612) regularly spaced apart on the periphery of the cup and designed to cooperate with the head (614) of a retractable peg (616) borne by the seat.

10. A wheel hub according to claim 9, **characterised in that** the clamping means comprise anti-theft means with a pair of outer rings (720) provided with a release receptacle (724), a pair of cams (726), offset and coaxial to the rings (720), and integral with the control lever (700), each being provided with a locking peg (732), the assembly being rotationally mounted on a fixed axle.
